# EUROPÄISCHE PATENTSCHRIFT

(11) **EP 0 903 266 B1**
(45) Veröffentlichungstag und Bekanntmachung des Hinweises auf die Patenterteilung: **18.12.2002**
(21) Anmeldenummer: 98114567.5
(22) Anmeldetag: 03.08.1998
(51) Int. Cl.: B60R 19/56, B60P 1/44

(54) **Variabler Unterfahrschutz**
Variable underride protection
Protection anti-encastrement variable

(30) Priorität: 19.09.1997 DE 19741457
(43) Veröffentlichungstag der Anmeldung: 24.03.1999
(73) Patentinhaber: Bär, Gerd, 74078 Heilbronn (DE)
(72) Erfinder: Bär, Gerd, 74078 Heilbronn (DE)
(74) Vertreter: KOHLER SCHMID + PARTNER

(56) Entgegenhaltungen:
- DD-A- 121 304
- DE-B- 1 002 641
- DE-U- 9 314 565
- DE-U- 9 419 691
- GB-A- 2 086 811
- US-A- 5 624 143
- PATENT ABSTRACTS OF JAPAN vol. 1997, no. 03, 31. März 1997 (1997-03-31) & JP 08 295193 A (NISSAN DIESEL MOTOR CO LTD), 12. November 1996 (1996-11-12)
- RUBI V ET AL: "NUMERISCHE SIMULATION DES CRASH-VERHALTENS VON NUTZFAHRZEUGEN" ATZ AUTOMOBILTECHNISCHE ZEITSCHRIFT,DE,FRANCKH'SCHE VERLAGSHANDLUNG. STUTTGART, Bd. 95, Nr. 10, 1. Oktober 1993 (1993-10-01), Seiten 528-530,532-53, XP000403347 ISSN: 0001-2785

## Beschreibung

Die Erfindung betrifft einen mehrteiligen Unterfahrschutz mit mehreren in Längsrichtung des Fahrzeugs nach hinten stehenden Unterfahrschutzteilen, die jeweils mit einer an ihrem vorderen Ende vorgesehenen ebenen Außenfläche an eine nach hinten stehende, senkrechte ebene Anlagefläche einer Anschlußeinrichtung angeschraubt sind, wobei jede Anlagefläche zumindest drei in einer, vorzugsweise waagerechten, Reihe etwa in Längsrichtung des Fahrzeugs hintereinander angeordnete Befestigungslöcher und jede ebene Außenfläche mehrere Befestigungslöcher aufweist.

Ein derartiger mehrteiliger Unterfahrschutz ist beispielsweise durch die DD 121 304 A bekannt geworden.

Bekanntlich müssen Nutzfahrzeuge mit einem Unterfahrschutz ausgestattet sein, der gewisse Festigkeitsanforderungen erfüllen muß. Weiterhin darf die Unterkante des Unterfahrschutzes eine maximale Höhe zum Erdboden nicht überschreiten und darf auch ein bestimmter Abstand zwischen Hinterkante des Fahrzeugs und Hinterkante des Unterfahrschutzes nicht überschritten werden.

Aus der eingangs genannten DD 121 304 A ist ein mehrteiliger Unterfahrschutz für ein Fahrzeug bekannt, wobei die einzelnen, in Fahrzeuglängsrichtung nach hinten stehenden Unterfahrschutzteile jeweils an einen Rahmenlängsträger des Fahrzeugs über vier in Fahrzeuglängsrichtung hintereinander angeordnete Schrauben angeschraubt sind. Die hintere der vier Schrauben bildet eine Drehachse, um die das Unterfahrschutzteil bei einem Auffahrunfall verschwenken kann, und zu diesem Zweck greifen die vorderen drei Schrauben in Langlöcher ein, die bezüglich der Drehachse kreisbogenförmig ausgebildet sind.

Bei Fahrzeugen mit Hubladebühnen am Heck ist die Einhaltung der oben genannten Vorschriften nicht ganz unproblematisch, da die Hubmechanik der Hubladebühne bei der Hub- und Senkbewegung den Raum durchschneidet, der von einem festen Unterfahrschutzprofil gebildet werden soll. Meist ist der Unterfahrschutz daher dreigeteilt, und jedes Unterfahrschutzteil ist direkt mit einem Tragprofil der Hubladebühne verbunden, in den meisten Fällen sogar direkt dort angeschweißt. Allerdings sind zur Erzielung der notwendigen Anbaumöglichkeiten an den verschiedensten Fahrzeugverhältnissen verschiedene Armlängen und verschiedene Anbauwinkel des Hubwerks notwendig. Wenn der Unterfahrschutz daher an dem Tragprofil des Hubwerks angebracht sein soll, sind diese Anbauparameter jeweils nur mit großem Aufwand mit den genannten Unterfahrschutzvorschrift zu vereinbaren. Bei einem am Tragprofil fest angeschweißten Unterfahrschutz, der dadurch in einer festen Relation zur Armlänge steht, steht z.B. bei steilen Anbauwinkeln die Hinterkante des Unterfahrschutzes über die Hinterkante des Fahrzeugs hinaus. Diese Unterfahrschutzkonstruktion ist bezogen auf die Herstellkosten des einzelnen Produktes zwar günstig, erfordert aber sehr viele Varianten und steht daher der Wirtschaftlichkeit entgegen.

Außerdem ist ein variabler Unterfahrschutz der Firma Gerd Bär GmbH bekannt, der am Tragprofil (Tragrohr) der Hubladebühne anschraubbar ist. Dazu sind für jedes Unterfahrschutzteil am Tragprofil zwei kurze Laschen vorgesehen, zwischen denen das vordere Ende des Unterfahrschutzteils verschraubt wird. Die Höhe der Laschen ist größer als die Höhe des Unterfahrschutzteils, so daß dieses in zwei Höhenpositionen an den Laschen befestigt werden kann. Um möglichst alle Anwendungsfälle abdecken zu können, sind bei dem bekannten Unterfahrschutz vier Baugruppen (kurzer gerader Unterfahrschutz, langer gerader Unterfahrschutz, kurzer schräger Unterfahrschutz, langer schräger Unterfahrschutz) vorgesehen. Durch Verdrehen um 180°, d.h. durch ein Vertauschen der Unterfahrschutzteile von links nach rechts, sind mit den vier Baugruppen acht verschiedene Konfigurationen zu erzielen.

Der Erfindung liegt demgegenüber die Aufgabe zugrunde, einen Unterfahrschutz der eingangs genannten Art dahingehend zu verbessern, daß er möglichst einfach in seiner Länge verstellt werden kann.

Diese Aufgabe wird erfindungsgemäß dadurch gelöst, daß die Anschlußeinrichtungen an einem quer zur Längsrichtung des Fahrzeugs verlaufenden Tragprofil einer Hubladebühne befestigt sind und daß jedes Unterfahrschutzteil an der jeweiligen Anschlußeinrichtung in mindestens zwei in Längsrichtung des Fahrzeugs verschiedenen Befestigungspositionen befestigbar ist, um ein Verstellen der Länge des Unterfahrschutzteils zu ermöglichen, wobei sich in den verschiedenen Befestigungspositionen des Unterfahrschutzteils jeweils mindestens zwei der Befestigungslöcher der Anlagefläche mit Befestigungslöchern der Außenfläche decken.

Dieser erfindungsgemäße Unterfahrschutz kann längenvariabel am Tragrohr angeschraubt werden. Als Bausatz braucht für die Längenvariabilität nur eine Baugruppe vorgesehen zu werden, verglichen mit vier bei dem bekannten Unterfahrschutz. Mit dieser Lösung wird der Unterfahrschutz nicht mehr wie seither in der Fabrik nach vorhergehender technischer Untersuchung angeschraubt, sondern lose als Bausatz mitgeliefert. Die Bestimmungen der Anbauparameter kann mit einer einfachen Entscheidungsmatrix, die als Ergebnis die entsprechende Armlänge beschreibt, vorgenommen werden. Der Fahrzeugbauer baut das Hubwerk nach den standardisierten Voraussetzungen an und schraubt dann selbst den Unterfahrschutz unter Einhaltung der Anbauvorschriften an.

Mit diesem Unterfahrschutz wird die Teilevielfalt auf das maximal mögliche Minimum, nämlich eine einheitliche Unterfahrschutzbaugruppe beschränkt. Vorzugsweise sind die Tragprofile aller Traglaststufen mit einheitlichen Anschlußeinrichtungen bzw. Anlageflächen ausgestattet.

Weiter erlaubt dieser Unterfahrschutz die fabrikmäßige Lakkierung von Hubwerk und Unterfahrschutz. Dies ist ein sehr großer Vorteil für den Fahrzeugbauer, der sich die Lackierung der komplizierten und verwinkelten Hubmechanik nach der Montage sparen kann. Außerdem ist die fabrikmäßige Lackierung der Baugruppen von der Qualität her gegenüber der Lakkierung nach der Montage unerreicht hoch.

Bei bevorzugten Ausführungsformen der Erfindung sind die Befestigungslöcher der Anlagefläche in zwei parallelen, vorzugsweise waagerechten Reihen mit je mindestens drei Befestigungslöchern angeordnet. Für besondere Ansprüche kann der Fahrzeugbauer auch beliebige Zwischenstellungen erzeugen, indem er zusätzliche Befestigungslöcher vorsieht.

Insbesondere wenn die Anlagefläche nur drei in einer Reihe hintereinander angeordnete Befestigungslöcher aufweist, müssen diese in äquidistantem Abstand angeordnet sind. Sind mehr Befestigungslöcher hintereinander angeordnet, müssen diese zumindest paarweise äquidistant entsprechend den Lochabstand in der Außenfläche sein.

Im einfachsten Fall kann die Anschlußeinrichtung eine, gegebenenfalls noch mit anderen Teilen verbundene Anschlußplatte sein, oder die Anschlußeinrichtung ist selbsttragend ausgebildet, z.B. ein in Längsrichtung des Fahrzeugs nach hinten stehendes Winkelprofil, vorzugsweise ein C-Profil, dessen eine Innenseite dann die Anlagefläche bildet.

Bei einer anderen bevorzugten Ausführungsform der Erfindung ist die durch das hintere Ende des Unterfahrschutzteils verlaufende Längsmittelebene bezüglich der durch sein vorderes Ende verlaufenden Längsmittelebene versetzt, so daß durch Verdrehen um 180°, d.h. durch ein Vertauschen des Unterfahrschutzteils von links nach rechts, zwei unterschiedliche Unterfahrschutzhöhen erreicht werden können. So kann der Unterfahrschutz in vier Positionen montiert werden.

Für die Längenvariabilität reicht es aus, wenn sich das mit der Anschlußeinrichtung verbundene vordere Ende des Unterfahrschutzteils im wesentlichen waagerecht nach hinten erstreckt.

Wenn das Unterfahrschutzteil in Längsrichtung des Fahrzeugs schräg verläuft, z.B. nach unten geneigt ist, ermöglicht dies nicht nur eine horizontale und vertikale Variabilität, sondern erlaubt auch ein diagonales Anbauen eines Unterfahrschutzes.

In einer besonderen Weiterbildung dieser Ausführungsform ist jenseits der zumindest drei in einer Reihe hintereinander angeordneten Befestigungslöcher sowohl am vorderen Ende des Unterfahrschutzteils als auch an der Anlagefläche der Anschlußeinrichtung mindestens jeweils noch ein weiteres Befestigungsloch vorgesehen, wobei sich die weiteren Befestigungslöcher in einer Längsposition des Unterfahrschutzteils zur Anlagefläche decken. Da meist nur eine Lochreihe verwendet werden kann, muß das mindestens eine weitere Befestigungsloch nach Ausrichtung des Unterfahrschutzes vom Fahrzeugbauer noch gebohrt werden.

Das hintere Ende des Unterfahrschutzteils kann nach hinten am einfachsten durch ein U-Profil oder ein Mehrkantprofil (Vierkantprofil) abgeschlossen sein, wobei insbesondere bei nach unten geneigtem Unterfahrschutz aus optischen Gründen die Verwendung eines Rund- oder Sechskantprofils als Abschluß angebrachter erscheint.

Um bei Fahrzeugen mit untergekuppelter Deichsel auch im Alleinbetrieb den Unterfahrschutz vorschriftsmäßig darzustellen, ist das Unterfahrschutzteil zweiteilig, wobei das hintere Unterfahrschutzteil an dem mit der Anschlußeinrichtung verbundenen vorderen Unterfahrschutzteil schwenkbar gelagert ist und in zumindest einer Schwenkposition feststellbar ist. Damit wird ein hochklappbarer Unterfahrschutz geschaffen, der im Zugbetrieb die nötige Deichselfreiheit bietet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine Draufsicht auf ein erstes Ausführungsbeispiel eines nach hinten stehenden erfindungsgemäßen Unterfahrschutzes, der am hinteren Ende eines Fahrzeugs mit einer Hubladebühne angeordnet ist;
- Fig. 2: eine Seitenansicht des in Fig. 1 gezeigten Unterfahrschutzes;
- Fig. 3: eine Seitenansicht eines zweiten Ausführungsbeispiels eines erfindungsgemäßen Unterfahrschutzes, dessen freies hinteres Ende nach unten geneigt ist; und
- Fig. 4: eine Seitenansicht eines dritten Ausführungsbeispiels eines erfindungsgemäßen Unterfahrschutzes, dessen hinteres Unterfahrschutzteil schwenkbar gelagert ist.

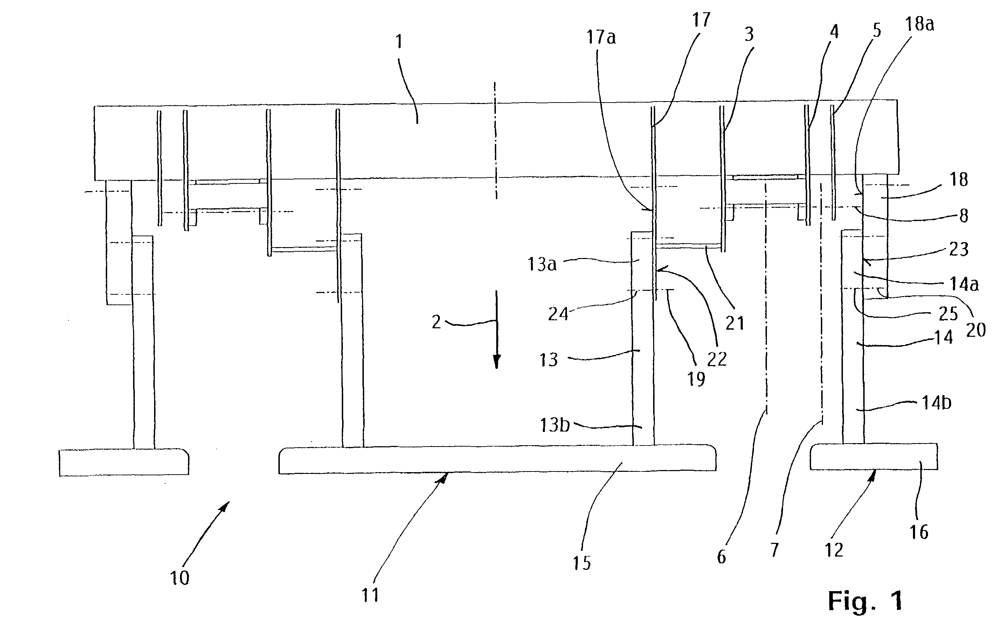

In der Zeichnung ist mit **1** ein quer zur Längsrichtung eines Fahrzeugs verlaufendes Tragprofil (Tragrohr) einer Hubladebühne gezeigt. Am Tragprofil sind beidseitig jeweils drei in Längsrichtung des Fahrzeugs nach hinten (Pfeilrichtung **2**) weisende Anschlußplatten **3, 4, 5** als Lagerstellen für eine Plattform tragende Tragarme **6, 7** vorgesehen, die und deren Schwenkachse **8** in Fig. 1 strichpunktiert dargestellt sind.

Am Tragprofil 1 ist weiterhin ein nach hinten stehender Unterfahrschutz **10** angebracht, der dreiteilig aus einem mittleren Unterfahrschutzteil **11** und zwei äußeren Unterfahrschutzteilen **12** besteht. Jedes Unterfahrschutzteil 11, 12 ist durch einen nach hinten stehenden Träger **13, 14** gebildet, dessen hinterem Ende **13b, 14b** mit einem quer zur Längsrichtung des Fahrzeugs verlaufenden Abschlußprofil **15, 16** abgeschlossen ist. Das vordere Ende **13a, 14a** des Trägers 13, 14 ist am Tragprofil 1 über eine Anschlußeinrichtung **17, 18** mit einer ebenen Anlagefläche **17a, 18a** befestigt, in der drei in Längsrichtung des Fahrzeugs hintereinander angeordnete Befestigungslöcher **19, 20** vorgesehen sind, wie durch die strichpunktierten Linien angedeutet ist. Im dargestellten Ausführungsbeispiel ist die innere Anschlußeinrichtung 17 eine den Anschlußplatten 3, 4, 5 entsprechende senkrechte Platte, die über einen Verbindungssteg **21** mit der inneren Anschlußplatte 3 versteift ist, während die äußeren Anschlußeinrichtungen 18 durch ein nach außen offenes C-Profil gebildet sind.

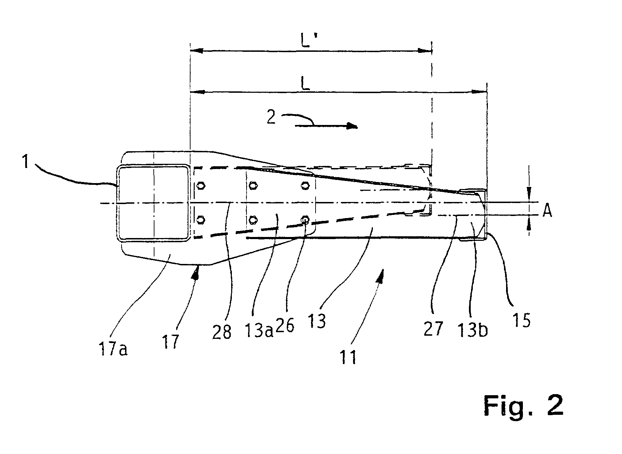

Jedes Unterfahrschutzteil 11, 12 liegt an der Anlagefläche 17a, 18a mit einer ebenen Außenfläche **22, 23** seines vorderen Endes 13a, 14a an. In der Außenfläche 22, 23 sind zwei Befestigungslöcher **24, 25** vorgesehen, die sich in zwei Längspositionen des Unterfahrschutzteils 11, 12 zur Anschlußeinrichtung 17, 18 mit jeweils zwei der drei in der Anlagefläche 17a, 18a vorgesehenen Befestigungslöcher decken. Dazu entspricht der Abstand der beiden Befestigungslöcher 24, 25 dem äquidistanten Abstand benachbarter Befestigungslöcher 19, 20. Mittels Schraubverbindungen **26** (Fig. 2) durch die sich deckenden Befestigungslöcher ist das Unterfahrschutzteil 11, 12 mit seiner Anschlußeinrichtung 17, 18 verbindbar.

Wie die Fig. 2 zeigt, sind in der Anlagefläche 17a insgesamt sechs Befestigungslöcher 19 in zwei parallelen waagerechten Reihen mit je drei Befestigungslöchern und in der Außenfläche 22 insgesamt vier Befestigungslöcher 24 in ebenfalls zwei parallelen waagerechten Reihen angeordnet. In der ersten Längsposition (durchgezogene Linien) des Unterfahrschutzteils 11 decken sich die vier Befestigungslöcher 24 in der Außenfläche 22 mit den mittleren und rechten vier Befestigungslöchern 19 in der Anlagefläche 17a, und der Unterfahrschutz 11 weist gegenüber dem Tragprofil 1 eine Länge L auf. In der zweiten Längsposition (gestrichelte Linien) des Unterfahrschutzteils 11 decken sich die vier Befestigungslöcher 24 in der Außenfläche 22 mit den mittleren und linken vier Befestigungslöchern 19 in der Anlagefläche 17a, und das Unterfahrschutzteil 11 weist gegenüber dem Tragprofil 1 eine kürzere Länge L' auf. Die Längendifferenz L-L' entspricht dem waagerechten Abstand benachbarter Befestigungslöcher 19.

Die durch das hintere Ende 13b des Trägers 13 verlaufende Längsmittelebene **27** ist bezüglich der durch sein vorderes Ende 13a verlaufenden Längsmittelebene **28** bzw. bezüglich der Mitte des Tragprofils 1 um ein Maß A versetzt, so daß eine um 180° gedrehte Anordnung des Unterfahrschutzes 11 an seinem hinteren Ende zu einer Höhendifferenz von 2A führt.

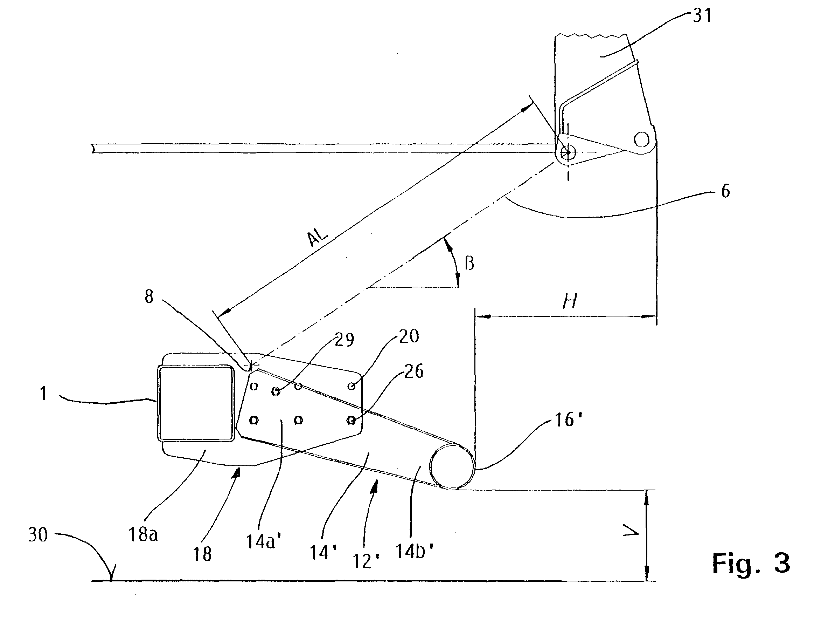

Während bei der Ausführungsform nach den Fign. 1 und 2 die Unterfahrschutzteile 11, 12 im wesentlich waagrecht nach hinten abstehen, zeigt Fig. 3 ein "diagonales" Unterfahrschutzteil 12', das hinten nach unten abgeneigt ist. Zur Verschraubung des Trägers 14' wird nur die untere Reihe von Befestigungslöchern 20 in der Anlagefläche 18a genutzt, wobei vom Fahrzeugbauer nach Ausrichtung des Unterfahrschutzteils 12' noch mindestens ein weiteres Befestigungsloch in Anlagefläche 18a und Außenfläche 23 gebohrt werden muß. Diese beiden weiteren Befestigungslöcher decken sich in einer Längsposition des Unterfahrschutzteils 12' zur Anlagefläche 18a, und der Träger 14' wird über eine weitere Schraubverbindung **29** festgeschraubt. Aus optischen Gründen ist das Abschlußprofil **16'** ein Rundrohr.

Mit dem diagonalen Unterfahrschutzteil 12' kann der Abstand V der hinteren Unterkante des Unterfahrschutzteils 12' zum Erdboden **30** verringert bzw. ein vorgegebener Maximalabstand ausgenutzt werden.

Die Längen- und Höhenvariabilität des beschriebenen Unterfahrschutzes ermöglicht es insbesondere, bei anderen Armlängen AL und steileren Winkeln β des Tragarms 6 einer Hubladebühne den Unterfahrschutz so in Länge und Höhe zu orientieren, daß ein Minimalabstand H zwischen der Hinterkante des Unterfahrschutzes 12' und der hinteren Aufbaukante des Fahrzeugaufbaus nicht unterschritten wird. Diese Aufbaukante ist im Ausführungsbeispiel durch die schwenkbar am Tragarm 6 angelenkte hochgeklappte Plattform **31** definiert.

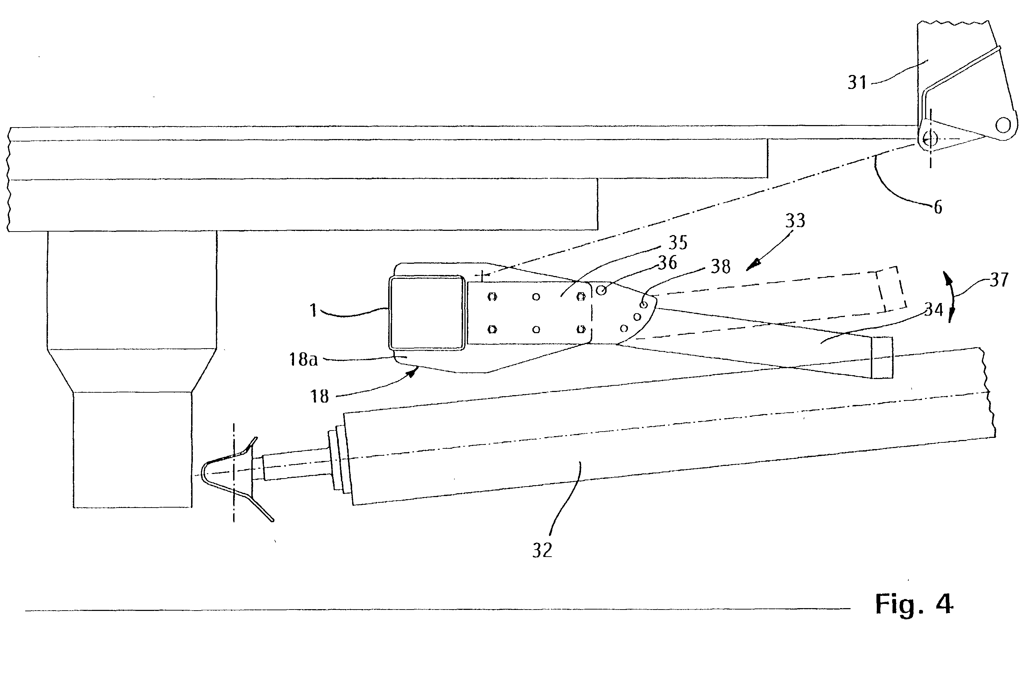

Bei Fahrzeugen mit untergekuppelter Deichsel **32** kann, um im Zugbetrieb die nötige Deichselfreiheit zu erzielen, ein klappbares Unterfahrschutzteil **33** (Fig 4) verwendet werden. Dazu ist das Unterfahrschutzteil 33 zweiteilig ausgebildet, wobei das hintere Unterfahrschutzteil **34** an dem mit der Anschlußeinrichtung 18 über Schraubverbindungen verbundenen vorderen Unterfahrschutzteil **35** bei **36** schwenkbar (Pfeil **37**) gelagert ist. In der gewünschten Schwenkstellung läßt sich das hintere Unterfahrschutzteil 34 über eins von mehreren vorgegebenen Befestigungslöchern **38** feststellen.

Bei allen gezeigten Ausführungsformen sind die Anlageflächen und die Lochmuster der Anschlußeinrichtungen vorzugsweise immer einheitlich, um eine hohe Variabilität sicherzustellen.

## Patentansprüche

1. Mehrteiliger Unterfahrschutz (10) mit mehreren in Längsrichtung eines Fahrzeugs nach hinten (2) stehenden Unterfahrschutzteilen (11, 12; 33), die jeweils mit einer an ihrem vorderen Ende (13a, 14a; 14a'; 35) vorgesehenen ebenen Außenfläche (22, 23) an eine nach hinten stehende, senkrechte ebene Anlagefläche (17a, 18a) einer Anschlußeinrichtung (17, 18) angeschraubt sind, wobei jede Anlagefläche (17a, 18a) zumindest drei in einer, vorzugsweise waagerechten, Reihe etwa in Längsrichtung des Fahrzeugs hintereinander angeordnete Befestigungslöcher (19, 20) und jede ebene Außenfläche (22, 23) mehrere Befestigungslöcher (24, 25) aufweist,
**dadurch gekennzeichnet,**
**daß** die Anschlußeinrichtungen (17a, 18a) an einem quer zur Längsrichtung des Fahrzeugs verlaufenden Tragprofil (1) einer Hubladebühne befestigt sind und daß jedes Unterfahrschutzteil (11, 12; 33) an der jeweiligen Anschlußeinrichtung (17a, 18a) in mindestens zwei in Längsrichtung des Fahrzeugs verschiedenen Befestigungspositionen befestigbar ist, um ein Verstellen der Länge des Unterfahrschutzteils (11, 12; 33) zu ermöglichen, wobei sich in den verschiedenen Befestigungspositionen des Unterfahrschutzteils (11, 12; 33) jeweils mindestens zwei der Befestigungslöcher (19, 20) der Anlagefläche (17a, 18a) mit Befestigungslöchern (24, 25) der Außenfläche (22, 23) decken.

2. Unterfahrschutz nach Anspruch 1, **dadurch gekennzeichnet, daß** die Befestigungslöcher (19, 20) der Anlagefläche (17a, 18a) in zwei parallelen, vorzugsweise waagerechten Reihen mit je mindestens drei Befestigungslöchern angeordnet sind.

3. Unterfahrschutz nach Anspruch 1 oder 2, **dadurch gekennzeichnet, daß** die in einer Reihe hintereinander angeordneten Befestigungslöcher (19, 20) der Anlagefläche (17a, 18a) in äquidistantem Abstand angeordnet sind.

4. Unterfahrschutz nach einem der vorhergehenden Ansprüche, **dadurch gekennzeichnet, daß** die Anschlußeinrichtung (18) ein in Längsrichtung des Fahrzeugs nach hinten (2) stehendes Winkelprofil, vorzugsweise ein C-Profil, ist, dessen eine Innenseite die Anlagefläche (18a) bildet.

5. Unterfahrschutz nach einem der vorhergehenden Ansprüche, **dadurch gekennzeichnet, daß** die durch das hintere Ende (13b, 14b) des Unterfahrschutzteils (11, 12) verlaufende Längsmittelebene (27) bezüglich der durch sein vorderes Ende (13a, 14a) verlaufenden Längsmittelebene (28) versetzt ist.

6. Unterfahrschutz nach einem der vorhergehenden Ansprüche, **dadurch gekennzeichnet, daß** sich das mit der Anschlußeinrichtung (17, 18) verbundene vordere Ende (13a, 14a) des Unterfahrschutzteils (11, 12) im wesentlichen waagerecht nach hinten erstreckt.

7. Unterfahrschutz nach einem vorhergehenden Ansprüche, **dadurch gekennzeichnet, daß** das Unterfahrschutzteil (11, 12) in Längsrichtung des Fahrzeugs nach hinten (2) schräg verläuft.

8. Unterfahrschutz nach Anspruch 7, **dadurch gekennzeichnet, daß** jenseits der zumindest drei in einer Reihe hintereinander angeordneten Befestigungslöcher (19, 20) sowohl am vorderen Ende (13a, 14a) des Unterfahrschutzteils (11, 12) als auch an der Anlagefläche (17a, 18a) der Anschlußeinrichtung (17, 18) mindestens jeweils noch ein weiteres Befestigungsloch vorgesehen ist und daß sich die weiteren Befestigungslöcher in einer Befestigungsposition des Unterfahrschutzteils (11, 12) zur Anlagefläche (17a, 18a) decken.

9. Unterfahrschutz nach einem der vorhergehenden Ansprüche, **dadurch gekennzeichnet, daß** das hintere Ende (13b, 14b; 14b') des Unterfahrschutzteils (11, 12) nach hinten durch ein U-Profil, ein Mehrkantprofil oder ein Rundprofil abgeschlossen ist.

10. Unterfahrschutz nach einem der vorhergehenden Ansprüche, **dadurch gekennzeichnet, daß** das Unterfahrschutzteil (33) zweiteilig ist, wobei das hintere Unterfahrschutzteil (34) an dem mit der Anschlußeinrichtung (18) verbundenen vorderen Unterfahrschutzteil (35) schwenkbar gelagert ist und in zumindest einer Schwenkposition feststellbar ist.

## Claims

1. Multi-component underride protector (10) with a plurality of underride protector components (11, 12; 33), which point rearwards (2) in the longitudinal direction of a vehicle and are each screwed by a flat outer surface (22, 23) provided on their front end (13a, 14a; 14a'; 35) to a rearward-pointing flat vertical contact surface (17a, 18a) of a connection device (17, 18), each contact surface (17a, 18a) having at least three fastening holes (19; 20) arranged one behind the other approximately in the longitudinal direction of the vehicle in a, preferably horizontal, row, and each flat outer surface (22, 23) having a plurality of fastening holes (24, 25), **characterised in that** the connection devices (17a, 18a) are secured on a lifting loading platform's support section (1) extending transversely to the longitudinal direction of the vehicle, and **in that** each underride protector component (11, 12; 33) can be secured on the respective connection device (17a, 18a) in at least two different fastening positions in the longitudinal direction of the vehicle in order to allow adjustment of the length of the underride protector component (11, 12; 33), at least two of the fastening holes (19, 20) in the contact surface (17a, 18a) overlapping with fastening holes (24, 25) in the outer surface (22, 23) in each of the various fastening positions of the underride protector component (11, 12; 33).

2. Underride protector according to Claim 1, **characterised in that** the fastening holes (19, 20) in the contact surface (17a, 18a) are arranged in two parallel, preferably horizontal, rows, each comprising at least three fastening holes.

3. Underride protector according to Claim 1 or 2, **characterised in that** the fastening holes (19, 20) in the contact surface (17a, 18a), which are arranged one behind the other in a row, are arranged at an equidistant spacing.

4. Underride protector according to one of the preceding claims, **characterised in that** the connection device (18) is an angle section, preferably a C section, which points rearwards (2) in the longitudinal direction of the vehicle and one inner side of which forms the contact surface (18a).

5. Underride protector according to one of the preceding claims, **characterised in that** the longitudinal centre plane (27) extending through the rear end (13b, 14b) of the underride protector component (11, 12) is offset relative to the longitudinal centre plane (28) extending through its front end (13a, 14a).

6. Underride protector according to one of the preceding claims, **characterised in that** the front end (13a, 14a) of the underride protector component (11, 12), which is connected to the connection device (17, 18), extends essentially horizontally rearwards.

7. Underride protector according to one of the preceding claims, **characterised in that** the underride protector component (11, 12) extends obliquely rearwards (2) in the longitudinal direction of the vehicle.

8. Underride protector according to Claim 7, **characterised in that** at least one further fastening hole is in each case provided beyond the at least three fastening holes (19, 20) arranged one behind the other in a row, both at the front end (13a, 14a) of the underride protector component (11, 12) and in the contact surface (17a, 18a) of the connection device (17, 18), and **in that** the further fastening holes overlap with the contact surface (17a, 18a) in one fastening position of the underride protector component (11, 12).

9. Underride protector according to one of the preceding claims, **characterised in that** the rear end (13b, 14b; 14b') of the underride protector component (11, 12) is closed off at the rear by a U section, a polygonal section or a round section.

10. Underride protector according to one of the preceding claims, **characterised in that** the underride protector component (33) is in two parts, the rear underride protector component (34) being pivotably mounted on the front underride protector component (35), which is connected to the connection device (18), and being capable of being fixed in at least one pivoted position.

## Revendications

1. Protection anti-encastrement (10) en plusieurs parties, avec plusieurs parties (11, 12; 33) de protection anti-encastrement dressées vers l'arrière (2) dans la direction longitudinale d'un véhicule, qui sont chacune, par une face extérieure plane (22, 23) prévue à leur extrémité avant (13a, 14a ; 14a' ; 35), boulonnées sur une face d'application plane verticale (17a, 18a), dressée vers l'arrière, d'un élément de raccordement (17, 18), chaque face d'application (17a, 18a) présentant au moins trois trous de fixation (19,20) disposés en succession environ dans la direction longitudinale du véhicule, en une rangée de préférence horizontale, et chaque face extérieure plane (22, 23) présentant plusieurs trous de fixation (24, 25),
**caractérisée en ce que** les éléments de raccordement (17a, 18a) sont fixés sur un profilé porteur (1), s'étendant transversalement à la direction longitudinale du véhicule, d'un hayon élévateur, et **en ce que** chaque partie (11, 12; 33) de protection anti-encastrement peut être fixée sur l'élément de raccordement respectif (17a, 18a) dans au moins deux positions de fixation différentes dans la direction longitudinale du véhicule, afin de permettre un réglage de la longueur de la partie (11, 12 ; 33) de protection anti-encastrement, au moins deux des trous de fixation (19,20) de la face d'application (17a, 18a) coïncidant chaque fois, dans les différentes positions de fixation de la partie (11, 12 ; 33) de protection anti-encastrement, avec des trous de fixation (24, 25) de la face extérieure (22, 23).

2. Protection anti-encastrement selon la revendication 1, **caractérisée en ce que** les trous de fixation (19,20) de la face d'application (17a, 18a) sont disposés en deux rangées parallèles, de préférence horizontales, comportant chacune au moins trois trous de fixation.

3. Protection anti-encastrement selon la revendication 1 ou 2, **caractérisée en ce que** les trous de fixation (19,20) de la face d'application (17a, 18a) qui sont disposés en succession en une rangée sont équidistants.

4. Protection anti-encastrement selon l'une des revendications précédentes, **caractérisée en ce que** l'élément de raccordement (18) est un profilé angulaire dressé vers l'arrière (2) dans la direction longitudinale du véhicule, de préférence un profilé en C, dont un côté intérieur forme la face d'application (18a).

5. Protection anti-encastrement selon l'une des revendications précédentes, **caractérisée en ce que** le plan médian longitudinal (27) qui passe par l'extrémité arrière (13b, 14b) de la partie (11, 12) de protection anti-encastrement est décalé par rapport au plan médian longitudinal (28) qui passe par son extrémité avant(13a, 14a).

6. Protection anti-encastrement selon l'une des revendications précédentes, **caractérisée en ce que** l'extrémité avant (13a, 14a), assemblée à l'élément de raccordement (17, 18), de la partie (11, 12) de protection anti-encastrement s'étend essentiellement horizontalement vers l'arrière.

7. Protection anti-encastrement selon l'une des revendications précédentes, **caractérisée en ce que** la partie (11, 12) de protection anti-encastrement s'étend en inclinaison vers l'arrière (2) dans la direction longitudinale du véhicule.

8. Protection anti-encastrement selon la revendication 7, **caractérisée en ce qu'**au moins un trou de fixation supplémentaire respectif est prévu, en plus des au moins trois trous de fixation (19,20) disposés en succession en une rangée, tant sur l'extrémité avant (13a, 14a) de la partie (11, 12) de protection anti-encastrement que sur la face d'application (17a, 18a) de l'élément de raccordement (17, 18), et **en ce que** les trous de fixation supplémentaires coïncident entre eux dans une position de fixation de la partie (11, 12) de protection anti-encastrement par rapport à la face d'application (17a, 18a).

9. Protection anti-encastrement selon l'une des revendications précédentes, **caractérisée en ce que** l'extrémité arrière (13b, 14b; 14b') de la partie (11, 12) de protection anti-encastrement est fermée vers l'arrière par un profilé en U, un profilé polygonal ou un profilé rond.

10. Protection anti-encastrement selon l'une des revendications précédentes, **caractérisée en ce que** la protection anti-encastrement (33) est en deux parties, la partie arrière (34) de protection anti-encastrement étant montée à pivotement sur la partie avant (35) de protection anti-encastrement, assemblée à l'élément de raccordement (18), et pouvant être bloquée dans au moins une position de pivotement.
